# EUROPEAN PATENT SPECIFICATION

(11) **EP 0 942 823 B1**
(45) Date of publication and mention of the grant of the patent: **05.06.2002**
(21) Application number: 97952321.4
(22) Date of filing: 09.12.1997
(51) Int. Cl.: B29C 65/04, B60N 3/04

(54) **APPARATUS FOR RADIO-FREQUENCY BONDING OF THERMOPLASTIC MEMBERS**
GERÄT ZUM RADIOFREQUENZVERLEIMEN VON THERMOPLASTISCHEN ELEMENTEN
APPAREIL DE LIAGE D'ELEMENTS THERMOPLASTIQUES PAR RADIOFREQUENCES

(30) Priority: 09.12.1996 US 761906
(43) Date of publication of application: 22.09.1999
(73) Proprietor: E.I. DU PONT DE NEMOURS AND COMPANY, Wilmington Delaware 19898 (US)
(72) Inventor: FRANCISCO, Harry, Bernard, Wilmington, DE 19803 (US); RIEGERT, Ronald, Jack, Newark, DE 19711 (US)
(74) Representative: Jones, Alan John
(86) International application number: US9722481
(87) International publication number: WO9825755

(56) References cited:
- US-A- 3 113 899
- US-A- 4 268 338
- US-A- 4 835 030

## Description

### BACKGROUND OF THE INVENTION

Field of the Invention The present invention relates to an apparatus for directly bonding thermoplastic members, such as a thermoplastic pad to a pile carpet, using radio-frequency electromagnetic energy (RF energy).

Description of the Prior Art The presence of wear-resistant pads on carpeted floor areas of an automobile interior is familiar to all drivers. In most cases such pads are fabricated of a thermoplastic sheet material having a predetermined peripheral shape. Typically, the pad is fabricated from a sheet of vinyl, such as polyvinyl chloride. The thermoplastic pad is either adhesively or directly bonded to the carpet. In typical adhesive bonding a thermoplastic adhesive is applied between the pad and the carpet, and radio-frequency electromagnetic energy (RF energy) or heat is used to melt the adhesive and effect the bond between the pad and the carpet. In an adhesive bonding situation overheating or burning is not usually a problem because the melting point of the thermoplastic adhesive is sufficiently lower than that of the materials of the carpet pile or pad. In direct bonding RF energy is applied to the pad and to the carpet to effect the bond therebetween. Direct bonding using RF energy is also known as "dielectric bonding". Such direct bonding of the pad to the carpet is preferred since no adhesive is required and since the bonding cycle time is reduced.

However, as will be fully explained herein, in some instances, especially in production environments, direct bonding of a pad to a carpet is difficult to achieve without overheating or discoloring of the carpet pile. This overheating or discoloring occurs due to increased field intensities caused by edge effects associated with the geometry of the electrodes of the bonding apparatus acting upon carpet material having a particular temperature dependence of its susceptibility to radio frequency energy. The term "susceptibility" as used herein means the ability of a material to convert electric field intensity to heat.

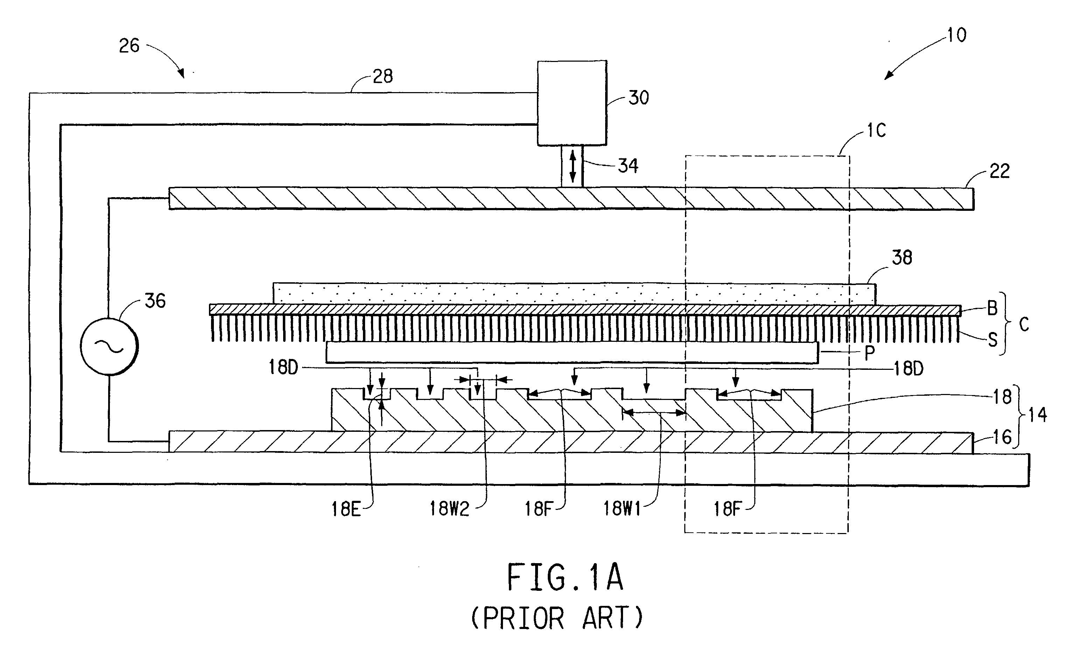

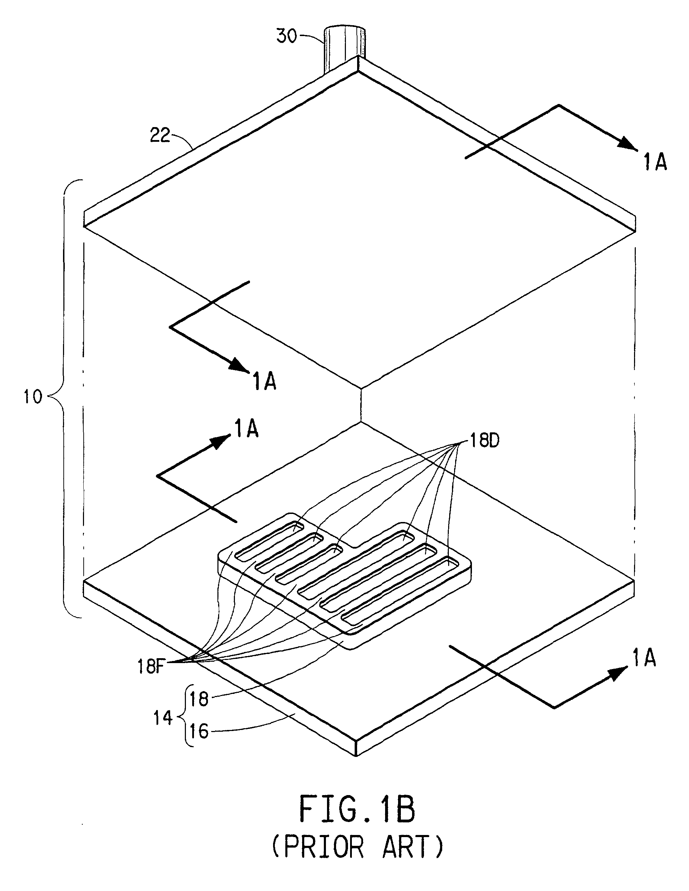

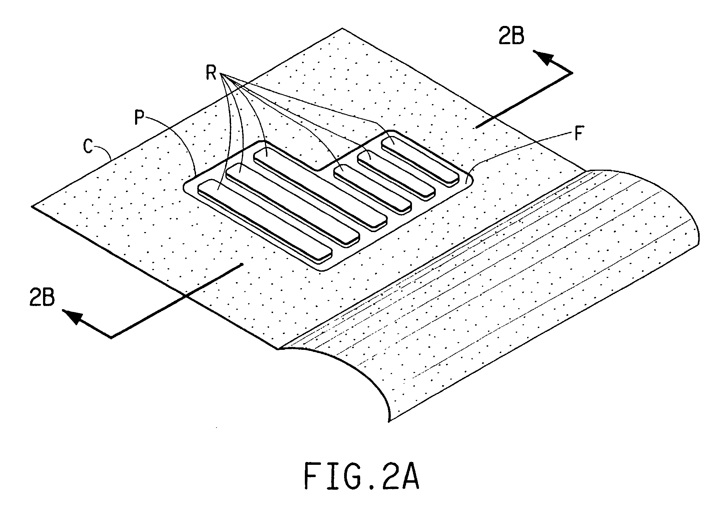

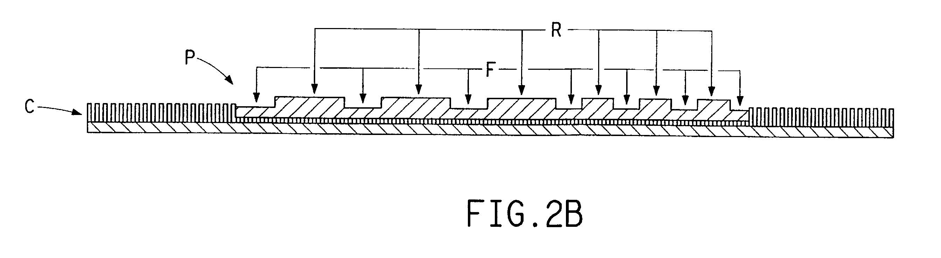

A direct bonding apparatus generally indicated by reference character 10 that is used in the prior art for applying RF energy to effect a bond between a first thermoplastic member, such as a thermoplastic pad P, to a first surface of a second thermoplastic member, such as a thermoplastic carpet C, is shown in Figures 1A and 1B. A finished automotive carpet C having the pad P bonded thereto is shown in Figures 2A and 2B. As suggested in Figure 2A the pad P has a predetermined peripheral shape depending upon the region of the automobile interior on which it is disposed. The pad P may also have raised areas R located thereon inwardly of the periphery. Flat regions F are formed on the pad P along the peripheral edge of the pad and on the pad intermediate the raised areas R.

The bonding apparatus 10 includes a first, die, electrode 14 and a second, backing, electrode 22. The electrodes 14, 22 are confrontationally arranged with respect to each other. The die electrode 14 includes a generally planar mounting portion 16 to which is attached a configured die member 18. Both the die electrode 14 (formed of mounting portion 16 and die member 18) as well as the backing electrode 22 are fabricated from an electrically conductive material, such as metal or a conductive composite.

The die member 18 has a peripheral shape that corresponds to the peripheral shape of the pad P to be bonded in the apparatus 10. In addition, the operative surface of the die member 18 has one or more relief features 18F, the edges of which are defined by depressions 18D. The relief features 18F of the die member 18 correspond to the flat regions F on the pad P, while the depressions 18D on the die member 18 correspond to the raised areas R on the pad P. The width dimensions of the depressions 18D (such as dimensions 18W1, 18W2) and the depth dimension of the depressions 18D (such as the dimension 18E) and thus, the width and height dimensions of the raised areas R, are dictated in accordance with the design to be imparted into the pad P. Typically, the depth dimension 18E is on the order of several millimeters.

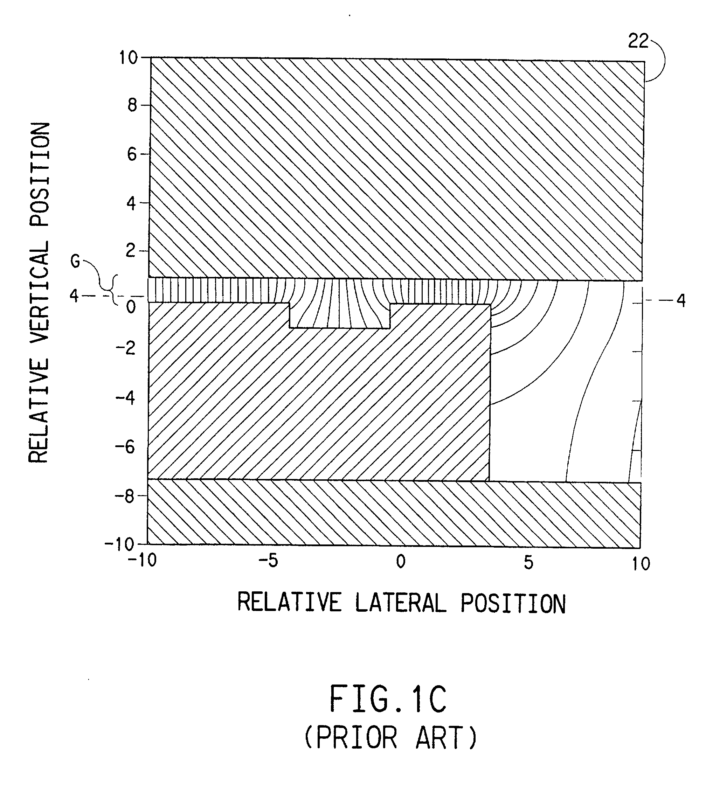

In the prior art apparatus 10 the backing electrode 22 is generally planar. The electrodes 14, 22 are mounted within a framework 28 of a press 26 (Figure 1A). Although the electrodes are shown as horizontally arranged with the die electrode 14 being located beneath the bonding electrode 22, it should be understood throughout this application that any convenient orientation of the electrodes 14, 22 with respect to the framework 28 and to each other may be used. The press 26 includes an actuator 30 operable to move the electrodes 14, 22 relative to each other (as suggested by the directional arrow 34) from an open position (shown Figure 1A) to a closed position (suggested in Figure 1C). Both electrodes 14, 22 are electrically connected to a suitable source 36 of high voltage RF energy. Typically, the source 36 outputs a radio frequency signal in the range from about one megahertz (1 MHz.) to one-hundred megahertz (100 MHz.) at a voltage in the range from about three-thousand volts (3 kV) to about ten-thousand volts (10 kV). Typical power levels of radio frequency bonding apparatus is in the range of five kilowatts (5 kW) to one hundred kilowatts (100 kW).

To bond a pad P to the carpet C the pad P is placed on the configured die member 18 of the die electrode 14, as is seen in Figure 1A . The carpet C is thereafter placed with its pile surface S in contact with the undersurface of the pad P. The surface of the backing B of the carpet C is presented toward the backing electrode 22. A resilient buffer layer 38, typically fabricated of a material (such as silicone rubber) having a low susceptibility to RF energy, is interposed between the surface of the backing B of the carpet C and the backing electrode 22.

After the materials have been layered into their relative positions as described and illustrated in Figure 1A a bonding cycle is initiated. The actuator 30 is asserted to move the backing electrode 22 toward the die electrode 14 to clamp the layered materials with a predetermined clamping pressure. Clamping pressure is usually specified in terms of the resulting gap (Figure 1C) defined between the raised area 18F of the die electrode 14 and the backing electrode 22. In practice the gap is limited by a physical stop in the press mechanism (not shown).

With the materials clamped the source 36 is activated and RF energy is applied between the electrodes 14, 22 to the layered materials clamped therebetween. The RF energy is applied at a predetermined voltage (typically, on the order of three thousand to ten thousand volts) for a predetermined period of time, termed the "heat cycle" (typically, on the order of five to twenty seconds), to heat the materials of the pad P and the pile of the carpet C. The source 36 is deactivated and the materials remain clamped for a second predetermined period of time, termed the "soak cycle" (typically, also on the order of five to twenty seconds) to permit the materials that were heated to cool and the bond between them to set. In an acceptable bond the material of the pad is adhered over the entire interfacial area between the pad P and the carpet C (i. e., the pad is "fully adhered") without discoloring or melt-through of the pad P or discoloring or excessive melting of the carpet pile adjacent to the periphery of the pad. The range of combinations of voltages and times able to produce a fully adhered pad is termed the "operating window".

It has been found that, especially in a production environment, a conventional bonding apparatus is not able to produce a satisfactory bond between a pad and a carpet when the pile of the carpet is producer-colored nylon having a topical stain-resist material. No matter what voltage and time parameters are chosen for the operating window either (1) the pad P is not fully adhered to the carpet C, (2) discoloring or perforations occur in the pad P adjacent to the corners or edges of the raised areas R, and/or (3) discoloring or melting of the carpet C occurs adjacent to the periphery of the pad P. The inability to achieve a satisfactory bond is believed due the combination of (1) localized increases in electric field intensity due to edge effects resulting from the geometry of the coupled electrodes of the bonding apparatus, (2) the temperature-dependent RF susceptibility characteristic of the material of the carpet, and (3) the RF susceptibility and thermal conductivity characteristics of the carpet backing .

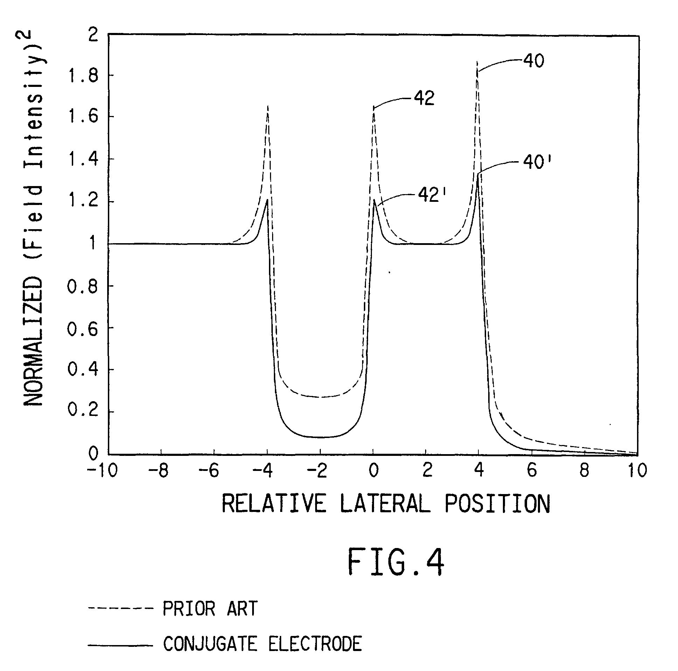

Figure 1C illustrates the electric field lines (shown as fine lines) between the die electrode and backing electrode in the portion of Figure 1A enclosed by the dashed box. For clarity of illustration the materials to be bonded that lie within the gap are not shown. Relatively sharp edge features are defined along the periphery of the die member 18 as well as along the relief features 18F thereof. The peripheral edges and the relief feature edges, together with the backing electrode 22, produce an electric field pattern in which field lines tend to converge in the vicinity of edges. The spacing of adjacent field lines in Figure 1C indicates the field intensity. A quantitative plot of the square of the field intensity (normalized) that is graphically illustrated in Figure 1C is shown in Figure 4 by the dashed line indicated by the reference label "Prior Art". The plot is taken along a reference line 4-4 that lies a distance equal to ten percent of the width G of the gap between the electrodes 18, 22. The abscissa of the plot is relative lateral position, while the ordinate of the plot is the square of the field intensity (normalized to the field intensity between the central region of a relief feature 18F and the backing electrode 22).

In automotive applications the pile surface S of the carpet C is usually formed from a thermoplastic polymeric material, typically a polyamide such as nylon. Nylon is the preferred due to its wear characteristics. However, nylon (and especially nylon 6,6) differs from other polymeric materials such as polyester and polypropylene used for carpets because the susceptibility of nylon to radio frequency energy increases with increasing temperature. A material having such a temperature dependent susceptibility characteristic is subject to a phenomenon known as "thermal runaway". In a thermal runaway situation the material of the carpet melts so that individual tufts lose their definition. Discoloration may also occur. The pile surface S of the carpet thus takes on an amorphous crusty appearance. The peak in the field intensity associated with a peripheral edge of the die electrode (as indicated at reference character 40 in Figure 4) and/or the peak in the field intensity associated with a relief feature edge of the die electrode (as indicated at reference character 42 in Figure 4), each coupled with the particular temperature-dependent susceptibility characteristic of the nylon used in the carpet results in a localized overheating which causes thermal runaway in localized regions of the material of the carpet pile in the vicinity of the edges on the die member 18. Adjacent to the periphery of the pad P discoloration and an amorphous crusty appearance may be manifested. In interior regions of the pad P, thermal runaway of the carpet pile material in combination with RF heating of the pad material may cause perforations of the pad to occur, particularly at edges and especially at corners of relief features. Depending upon the material used, the backing of the carpet may also contribute to the overall overheating problem.

The presence of additives such as colored pigments and/or topical stain-resist materials further increases the temperature dependence of the susceptibility of nylon to radio frequency energy and exacerbates the thermal runaway problem. It is believed that the further increase in temperature dependence is due to the mobility of the ions in the topical stain-resist material.

In view of the foregoing it is believed to be advantageous to provide a bonding apparatus that minimizes the problems of localized excessive heating when bonding a first thermoplastic member to a second thermoplastic member. More particularly, it is believed to be advantageous to provide a bonding apparatus that minimizes the problem of thermal runaway when bonding a thermoplastic pad to a nylon pile carpet.

US 3,113,899 discloses a method of bonding together relatively thin fibreboards at least one of which has a thermoplastic coating thereon. An apparatus in accordance with the preamble of claim 1 is used which comprises specifically designed upper and lower electrodes (11,12) which are substantially identical and are formed to exert a greater or increased pressure on concentrated or predetermined points of contact within the overlapped marginal edge portions. Each electrode is provided with a crenelated or corrugated pressure-exerting face defined by a plurality of parallel and spaced-apart narrow, elongate bars (16). The bars (16) of the electrodes (11,12) are preferably positioned in direct opposing relation.

### SUMMARY OF THE INVENTION

The present invention is directed to a bonding apparatus using radio frequency energy, the bonding apparatus comprising a first, die, electrode and a second, backing, electrode, the die electrode having peripheral edges and at least one relief feature thereon, the backing electrode having a conjugate bonding member thereon, both the die electrode and the conjugate bonding member of the backing electrode having a peripheral shape that corresponds to each other, the conjugate bonding member having at least one relief feature thereon that corresponds to the relief feature of the die electrode, each relief feature having a width dimension and a depth dimension, characterised in that the depth dimension of the relief feature on the conjugate bonding member is approximately an order of magnitude greater than the depth dimension of the corresponding relief feature on the die electrode.

Furthermore the present invention is directed to the use of the bonding apparatus to bond a first thermoplastic member to a first surface of a second thermoplastic member, wherein the first thermoplastic member has a predetermined peripheral shape which corresponds to the peripheral shape of both the die electrode and the conjugate bonding member of the bonding apparatus, the thermoplastic members being fabricated of materials which absorb radio frequency energy.

Preferably the second thermoplastic member is a carpet having a pile surface made of a polymeric material susceptible to thermal runaway.

In accordance with the present invention the backing electrode has a bonding member that has a peripheral shape that corresponds to the peripheral shape of the die electrode. The backing electrode also has relief feature(s) sized and located to correspond to the size and location of the relief feature(s) (if any) on the die electrode. Thus concentrations of electric field intensity in the vicinity of the peripheral edges of the die electrode (and in the vicinity of the relief feature edges, if any) are minimized so that bonding of a pad to a carpet may be effected without thermal runaway. The pad is fully bonded to the carpet without the occurrence of localized overheating of the carpet pile or perforation of the pad.

### BRIEF DESCRIPTION OF THE DRAWING

The invention will be more fully understood from the following detailed description, taken in connection with the accompanying drawing, in which:
Figure 1A is a side-elevational view in section of a bonding apparatus of the prior art, while Figure 1B is tilted (in clam-shell fashion) perspective view (with the materials to be bonded not shown for clarity of illustration) of the bonding apparatus of Figure 1A, and Figure 1C is a schematic view showing the portion of the bonding apparatus of Figure 1A enclosed by the dashed box and illustrating the electric field lines between the die electrode and backing electrode therein;

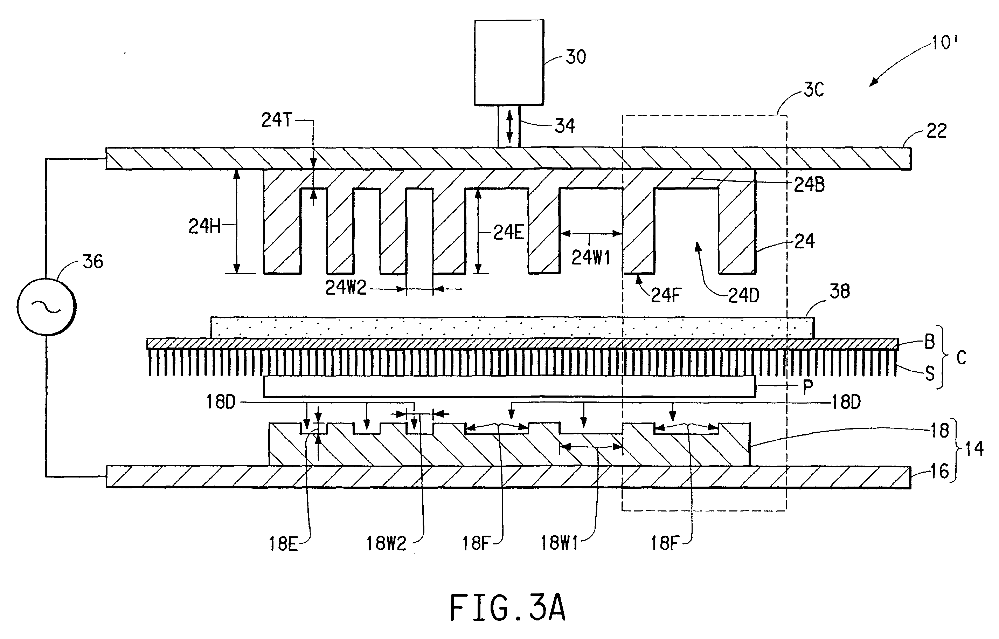

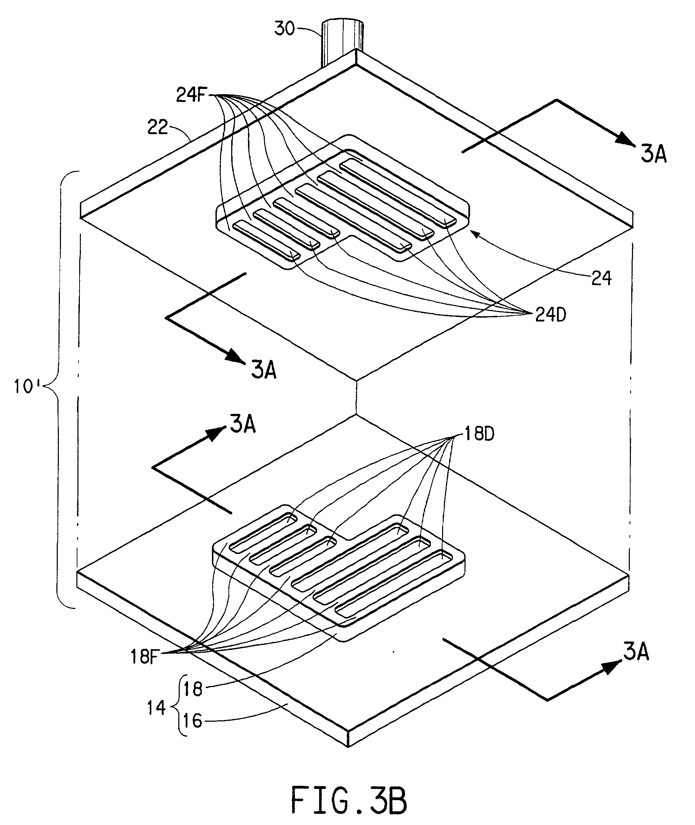

Figure 2A is a perspective view of a pad bonded to the carpet using the bonding apparatus of Figures 1A and 1B and of Figures 3A and 3B, while Figure 2B is a sectional view taken along section lines 2B-2B in Figure 2A;

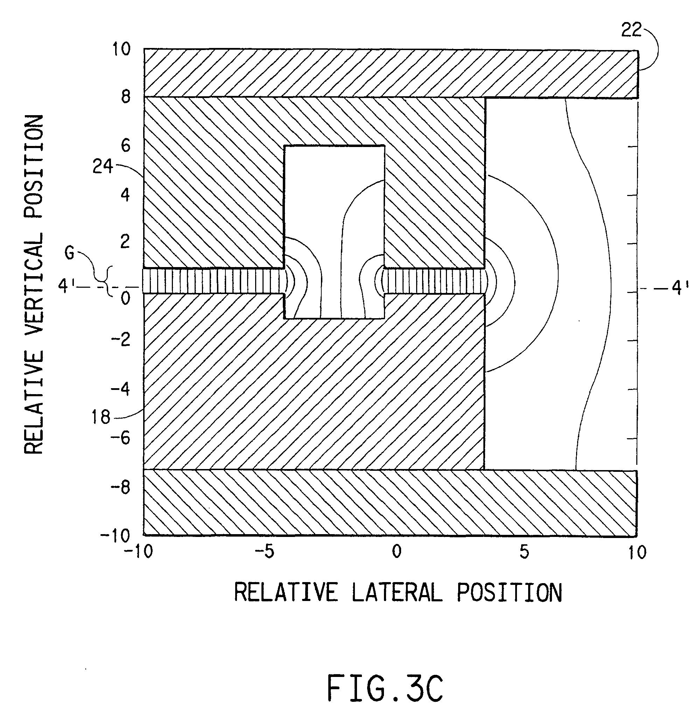

Figures 3A is side-elevational view in section of a bonding apparatus in accordance with the present invention, Figure 3B is a tilted (in clam-shell fashion) perspective view of the bonding apparatus of Figure 3A with the electrodes exposed to show the corresponding relief features on the surfaces of the die electrode and the bonding member, and Figure 3C is a schematic view. showing the portion of the bonding apparatus of Figure 3A enclosed by the dashed box and illustrating the electric field lines between the die electrode and the conjugate bonding member on the backing electrode therein;
Figure 4 is a plot showing a comparison of the square of the electric field intensities graphically illustrated in Figure 1C (the prior art) and of the square of the electric field intensities graphically illustrated in Figure 3C for the apparatus of the present invention, the plots being (normalized to the field intensity between the central region of a relief feature 1BF and the backing electrode 22); and

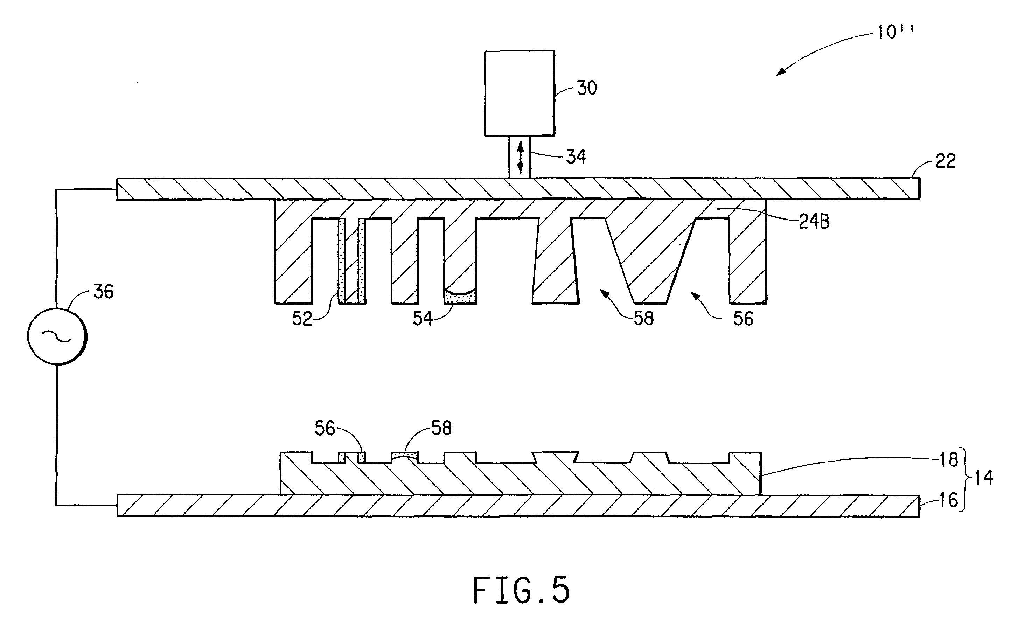

Figure 5 is a side-elevational view, in section, illustrating further various alternative modifications to a bonding apparatus in accordance with the present invention.

### DETAILED DESCRIPTION OF THE INVENTION

Throughout the following detailed description, similar reference numerals refer to similar elements in all Figures of the drawings. It should be understood that although the invention is described in terms of the bonding of a thermoplastic pad to the surface of a nylon pile carpet, the invention is generally applicable to the bonding a first thermoplastic member to a second thermoplastic member.

Figures 3A and 3B illustrate a bonding apparatus 10' in which thermal runaway is minimized by reducing the localized concentration of field intensity between the coupled electrodes. In accordance with the present invention a conjugate bonding member 24 is mounted in electrically conductive contact with the backing electrode 22. As is the case with both the die electrode 14 and the backing electrode 22, the conjugate member 24 is fabricated from an electrically conductive material, such as metal or a conductive composite.

The conjugate bonding member 24 has a peripheral shape that corresponds to the peripheral shape of the die electrode 18. In addition the conjugate bonding member 24 also includes a relief feature 24F sized and located to correspond to the size and location of each relief feature 18F on the die electrode 18. Thus, each edge formed on the conjugate bonding member 24, whether it is a peripheral edge or an edge on a relief feature, corresponds to an edge provided on the die electrode 18.

The conjugate bonding member 24 is preferably fabricated or assembled in a manner such that the time required to mount the conjugate bonding member 24 to the backing electrode 22 in the press 26 is minimized. Preferably, this is accomplished by forming the conjugate bonding member 24 as an integral member from a single piece of electrically conductive material. When so formed the conjugate bonding member 24 includes a base portion 24B of nominal thickness 24T from which relief features 24F extend. Alternatively, the conjugate member 24 may also be assembled into a unitized structure from individual modular pieces which are attached (as by suitable fasteners) to a base or directly to the surface of the backing electrode 22.

If desired, the conjugate bonding member 24 (however configured) may be spaced from the backing electrode 22 using any convenient form of electrically conductive standoffs (not shown).

However formed, each relief feature 24F is defined on the conjugate bonding member 24 by depressions 24D which are located as mirror images of the depressions 18D on the die electrode 18. Each depression 24D has a predetermined width dimension determined in accordance with the width of the corresponding depression 18D on the die electrode 18. Preferably, the width dimension of the depressions 24D (and, thus, the width of the relief feature 24F defined thereby) are substantially equal to the width dimension of the corresponding depression 18D (and, thus, the width of the relief feature 18F defined thereby). By substantially equal it is meant that the widths may vary up to about ten (10) percent.

The width dimensions of depression 24D can vary across the breadth of the conjugate bonding member 24. Thus, as is seen from Figure 3A, the width dimensions 24W1 and 24W2 on the conjugate bonding member 24 vary in accordance with the width dimensions 18W1 and 18W2 on the die electrode 18.

Each depression 24D has a depth dimension indicated by the reference character 24E. The operative face of each relief feature 24F is thus disposed at least the predetermined distance 24E above the surface of the base portion 24B of the conjugate bonding member 24. Owing to the thickness dimension 24T of the base 24B, such an arrangement places the peripheral edge of backing electrode 22 a distance 24H (equal to the distance 24E plus the thickness 24T) from the surface of the backing electrode 22.

It has been found that a distance greater than about two (2) centimeters is sufficient for the distance 24E. It should be noted that the distance 24E is approximately an order of magnitude greater than the depth dimension 18E of the depressions in the die electrode 18.

So long as the distance 24E meets the minimum requirement above described, concentrations of electric field intensity in the vicinity of the peripheral edges of the die electrode 18 and along the edges of relief features on the die electrode 18 are minimized. This is illustrated by reference to Figures 3C and 4.

Figure 3C is similar to Figure 1C and illustrates the electric field lines (again shown as fine lines) between the die electrode and conjugate bonding member 24 on the backing electrode 22 in the portion of Figure 3A enclosed by the dashed box. Again, for clarity of illustration, the materials to be bonded that lie within the gap are not shown. The peripheral edges and the relief feature edges of the die electrode 18, together with the corresponding edges on the conjugate bonding member 24, produce an electric field pattern in which field lines tend to converge in the vicinity of edges to a lesser extent than is the case in Figure 1C. A qualitative plot of the electric field intensities illustrated in Figure 3C is indicated on Figure 4 by the solid line labeled "Conjugate Electrode". The plot is taken along a reference line 4'-4' that lies a distance equal to ten percent of the width G of the gap between the die electrode 18 and the conjugate bonding member 24. The peak in the square of the field intensity associated with a peripheral edge of the die electrode is indicated at reference character 40' in Figure 4 while the peak in the square of the field intensity associated with a relief feature edge of the die electrode is indicated at reference character 42'. The peaks 40', 42' are given at the same relative lateral positions as the peaks 40, 42, respectively.

The diminution of field intensity concentration resulting from the apparatus of the present invention may be appreciated by comparing the magnitudes of the peaks 40, 40' (which correspond to a peripheral edge on the die electrode) and the magnitudes of the peaks 42, 42' (which correspond to an edge of a relief feature on the die electrode). It may be readily seen in each case that the concentration of field intensity is reduced in a bonding apparatus 10' having a conjugate bonding member 24 in accordance with the present invention.

The concentration of field intensity adjacent the edges may be further diminished by utilizing the further modifications illustrated in Figure 5. In one alternative arrangement a sleeve 52 is a sleeve disposed about the side of a relief feature 24F. The sleeve 52 is formed from a rigid electrically nonconductive material having a low RF susceptibility, such as quartz , glass, or a low loss composite material. In another alternative arrangement, a crown 54 is disposed over the operative surface of a relief feature 24F. The crown 54 is likewise formed from a rigid electrically nonconductive material having a low RF susceptibility, such as quartz, glass, or a low loss composite material. Consistent with the pattern being imparted to the pad, a sleeve 56 or a crown 58 may be provided to relief features 18F on the die electrode 18.

It should be appreciated from the foregoing that the bonding apparatus of the present invention permits a first thermoplastic member to be fully bonded to a second thermoplastic member without the occurrence of localized overheating or discoloration. Even if the materials to be bonded do not exhibit a temperature-dependent RF susceptibility characteristic, use of a bonding apparatus in accordance with the present invention permits bonding to occur with higher applied RF voltages and shorter bonding cycle times.

Those skilled in the art, having the benefit of the teachings of the present invention as set forth herein, may effect numerous modifications thereto. For example, the walls defining the depressions 24D may be inclined or curved inwardly or outwardly from the vertical orientation shown in Figure 3A so as to define a relief feature that is broader (i.e., flaring) or narrower (i.e., undercut) adjacent to the base portion 24B. These alternatives are generally indicated at reference characters 56 and 58 in Figure 5. The periphery of the conjugate member may have similar alternative configurations, if desired. Consistent with the pattern being imparted to the pad, similar modifications may be effected to the walls defining the depressions 18D on the die electrode 18. Such modifications are to be construed as lying within the contemplation of the present invention, as defined by the appended claims.

## Claims

1. A bonding apparatus (10') using radio frequency energy, the bonding apparatus (10') comprising a first, die, electrode (14) and a second, backing, electrode (22), the die electrode (18) having peripheral edges and at least one relief feature (18F) thereon, the backing electrode (22) having a conjugate bonding member (24) thereon, both the die electrode (18) and the conjugate bonding member (24) of the backing electrode (22) having a peripheral shape that corresponds to each other, the conjugate bonding member (24) having at least one relief feature (24F) thereon that corresponds to the relief feature (18F) of the die electrode, each relief feature (18F, 24F) having a width dimension (18W, 24W) and a depth dimension (18E, 24E), **characterised in that** the depth dimension (24E) of the relief feature on the conjugate bonding member (24) is approximately an order of magnitude greater than the depth dimension (18E) of the corresponding relief feature on the die electrode (18).

2. A bonding apparatus (10') according to claim 1 wherein the depth dimension (24E) of the relief feature on the conjugate bonding member (24) is greater than 2 cm.

3. A bonding apparatus (10') according to claim 1 or 2 wherein the relief feature (24F) on the conjugate bonding member (24) has a sleeve (52) disposed about the side thereof, the sleeve (52) being formed from a rigid electrically non-conductive material having a low RF susceptibility.

4. A bonding apparatus (10') according to any preceding claim wherein the relief feature (18F) on the die electrode (18) has a sleeve (56) disposed about the side thereof, the sleeve (56) being formed from a rigid electrically non-conductive material having a low RF susceptibility.

5. A bonding apparatus (10') according to claim 1 or 2 wherein the relief feature (24F) on the conjugate bonding member (24) has a crown (54) disposed over the operative surface thereof, the crown (54) being formed from a rigid electrically non-conductive material having a low RF susceptibility.

6. A bonding apparatus (10') according to any one of claims 1, 2 or 5 wherein the relief feature (18F) on the die electrode (18) has a crown (58) disposed over the operative surface thereof, the crown (58) being formed from a rigid electrically non-conductive material having a low RF susceptibility.

7. Use of a bonding apparatus (10') according to any preceding claim to bond a first thermoplastic member (P) to a first surface of a second thermoplastic member (S), wherein the first thermoplastic member (P) has a predetermined peripheral shape which corresponds to the peripheral shape of both the die electrode (18) and the conjugate bonding member (24) of the bonding apparatus (10'), the thermoplastic members (P and S) being fabricated of materials which absorb radio frequency energy.

8. Use of a bonding apparatus (10') according to claim 7 wherein the second thermoplastic member (C) is a carpet having a pile surface (S) made of a polymeric material susceptible to thermal runaway.

## Patentansprüche

1. Klebevorrichtung (10') mit Anwendung von Hochfrequenzenergie, wobei die Klebevorrichtung (10') aufweist: eine erste Stempelelektrode (14) und eine zweite Stützelektrode (22), wobei die Stempelelektrode (18) Umfangskanten und mindestens ein darauf vorgesehenes Reliefmerkmal (18F) aufweist, wobei die Stützelektrode (22) ein darauf vorgesehenes konjugiertes Klebeelement (24) aufweist, wobei sowohl die Stempelelektrode (18) als auch das konjugierte Klebeelement (24) der Stützelektrode (22) eine einander entsprechende Umfangsform aufweisen, wobei das konjugierte Klebeelement (24) mindestens ein darauf vorgesehenes Reliefmerkmal (24F) aufweist, das dem Reliefmerkmal (18F) der Stempelelektrode entspricht, wobei jedes Reliefmerkmal (18F, 24F) eine Breitenabmessung (18W, 24W) und eine Tiefenabmessung (18E, 24E) aufweist, **dadurch gekennzeichnet, daß** die Tiefenabmessung (24E) des Reliefmerkmals auf dem konjugierten Klebeelement (24) um annähernd eine Größenordnung größer ist als die Tiefenabmessung (18E) auf dem entsprechenden Reliefmerkmal der Stempelelektrode (18).

2. Klebevorrichtung (10') nach Anspruch 1, wobei die Tiefenabmessung (24E) des Reliefmerkmals auf dem konjugierten Klebeelement (24) größer als 2 cm ist.

3. Klebevorrichtung (10') nach Anspruch 1 oder 2, wobei das Reliefmerkmal (24F) auf dem konjugierten Klebeelement (24) eine um seine Seite herum angeordnete Hülse (52) aufweist, wobei die Hülse (52) aus einem steifen, elektrisch nichtleitenden Material mit niedriger HF-Suszeptibilität besteht.

4. Klebevorrichtung (10') nach einem der vorstehenden Ansprüche, wobei das Reliefinerkmal (18F) auf die Stempelelektrode (18) eine um seine Seite herum angeordnete Hülse (56) aufweist, wobei die Hülse (56) aus einem steifen, elektrisch nichtleitenden Material mit niedriger HF-Suszeptibilität besteht.

5. Klebevorrichtung (10') nach Anspruch 1 oder 2, wobei das Reliefmerkmal (24F) auf dem konjugierten Klebeelement (24) eine über seiner Arbeitsfläche angeordnete Krone (54) aufweist, wobei die Krone (54) aus einem steifen, elektrisch nichtleitenden Material mit niedriger HF-Suszeptibilität besteht.

6. Klebevorrichtung (10') nach einem der Ansprüche 1, 2 oder 5, wobei das Reliefmerkmal (18F) auf die Stempelelektrode (18) eine über seiner Arbeitsfläche angeordnete Krone (58) aufweist, wobei die Krone (58) aus einem steifen, elektrisch nichtleitenden Material mit niedriger HF-Suszeptibilität besteht.

7. Verwendung einer Klebevorrichtung (10') nach einem der vorstehenden Ansprüche zum Ankleben bzw. Bonden eines ersten thermoplastischen Elements (P) an eine erste Oberfläche eines zweiten thermoplastischen Elements (S), wobei das erste thermoplastische Element (P) eine vorgegebene Umfangsform aufweist, die der Umfangsform sowohl der Stempelelektrode (18) als auch des konjugierten Klebeelements (24) der Klebevorrichtung (10') entspricht, wobei die thermoplastischen Elemente (P und S) aus Materialien gefertigt werden, die Hochfrequenzenergie absorbieren.

8. Verwendung einer Klebevorrichtung (10') nach Anspruch 7, wobei das zweite thermoplastische Element (C) ein Teppich mit einer Floroberfläche (S) ist, die aus einem gegen thermisches Fließen empfindlichen Polymermaterial besteht.

## Revendications

1. Appareil de collage (10') utilisant l'énergie radiofréquence, l'appareil de collage (10') comprenant une première électrode de matrice (14) et une seconde électrode de dossier (22), l'électrode de matrice (18) comportant des bords périphériques et sur elle au moins un relief (18F), l'électrode de dossier (22) comportant sur elle un élément de collage conjugué (24), l'électrode de matrice (18) et l'élément de collage conjugué (24) de l'électrode de dossier (22) présentant tous deux des formes périphériques correspondant l'une à l'autre, l'élément de collage conjugué (24) comportant sur lui au moins un relief (24F) qui correspond au relief (18F) de l'électrode de matrice, chaque relief (18F, 24F) ayant une dimension de largeur (18W, 24W) et une dimension de profondeur (18E, 24E), **caractérisé en ce que** l'ordre de grandeur de la dimension de profondeur (24E) du relief sur l'élément de collage conjugué (24) est approximativement supérieur d'un ordre à celui de la dimension de profondeur (18E) du relief correspondant sur l'électrode de matrice (18).

2. Appareil de collage (10') selon la revendication 1, dans lequel la dimension de profondeur (24E) du relief sur l'élément de collage conjugué (24) est supérieure à 2 cm.

3. Appareil de collage (10') selon la revendication 1 ou 2, dans lequel le relief (24F) sur l'élément de collage conjugué (24) comporte une douille (52) disposée autour de son côté, la douille (52) étant formée à partir d'un matériau rigide électriquement non-conducteur présentant une faible susceptibilité RF.

4. Appareil de collage (10') selon l'une quelconque des revendications précédentes, dans lequel le relief (18F) sur l'électrode de matrice (18) comporte une douille (56) disposée autour de son côté, la douille (56) étant formée à partir d'un matériau rigide électriquement non-conducteur présentant une faible susceptibilité RF.

5. Appareil de collage (10') selon la revendication 1 ou 2, dans lequel le relief (24F) sur l'élément de collage conjugué (24) comporte une couronne (54) disposée sur sa surface active, la couronne (54) étant formée à partir d'un matériau rigide électriquement non-conducteur présentant une faible susceptibilité RF.

6. Appareil de collage (10') selon l'une quelconque des revendications 1, 2 ou 5, dans lequel le relief (18F) sur l'électrode de matrice (18) comporte une couronne (58) disposée sur sa surface active, la couronne (58) étant formée à partir d'un matériau rigide électriquement non-conducteur présentant une faible susceptibilité RF.

7. Utilisation d'un appareil de collage (10') selon l'une quelconque des revendications précédentes pour lier un premier élément thermoplastique (P) à une première surface d'un second élément thermoplastique (S), dans laquelle le premier élément thermoplastique (P) présente une forme périphérique prédéterminée qui correspond à la forme périphérique à la fois de l'électrode de matrice (18) et de l'élément de collage conjugué (24) de l'appareil de collage (10'), les éléments thermoplastiques (P et S) étant fabriqués à partir de matériaux absorbant l'énergie radiofréquence.

8. Utilisation d'un appareil de collage (10') selon la revendication 7, dans laquelle le second élément thermoplastique (C) est un tapis possédant une surface pile (S) réalisée à partir d'un matériau polymère susceptible de subir un emballement thermique.
